# EUROPEAN PATENT SPECIFICATION

(11) **EP 1 413 372 B1**
(45) Date of publication and mention of the grant of the patent: **02.03.2005**
(21) Application number: 02751185.6
(22) Date of filing: 18.07.2002
(51) Int. Cl.: B21D 53/18, B23P 15/10, F02F 3/22

(54) **METHOD OF MOUNTING A METAL SHEET RING ASSEMBLED AND WELDED IN A CARRIER HOOP, TO CONFORM THE ANNULAR COOLING TUBE OF A PISTON OF INTERNAL COMBUSTION ENGINE, AND METHOD OF MANUFACTURE A METAL SHEET RING ASSEMBLED WITH A CARRIER HOOP**
VERFAHREN ZUR MONTAGE EINES METALLRINGES, DAS AN EINEM TRÄGERBUND MONTIERT UND DAMIT VERLÖTET IST, UM DIE RINGFÖRMIGE KÜHLLEITUNG EINES VERBRENNUNGSMOTORKOLBENS ZU BILDEN, UND VERFAHREN ZUR HERSTELLUNG DES RIPPENMETALLRINGES
PROCEDE DE MONTAGE D'UNE BAGUE METALLIQUE ASSEMBLEE ET SOUDEE SUR UNE RONDELLE PORTEUSE PERMETTANT DE CONFIGURER LE CONDUIT ANNULAIRE DE REFROIDISSEMENT D'UN PISTON DE MOTEUR A COMBUSTION INTERNE, PROCEDE DE FABRICATION DE LADITE BAGUE A FLASQUE EN FEUILLE METALLIQUE

(30) Priority: 30.07.2001 AR 0103621; 30.07.2001 AR 0103622
(43) Date of publication of application: 28.04.2004
(73) Proprietor: Appo, Roberto Oscar, 08018 Barcelona (ES)
(72) Inventor: Appo, Roberto Oscar, 08018 Barcelona (ES)
(74) Representative: Canela Giménez, Teresa
(86) International application number: PCT/ES2002/000365
(87) International publication number: WO 2003/011497

(56) References cited:
- DE-A- 19 722 053
- FR-A- 2 044 242
- US-A- 1 428 777
- US-A- 1 623 325
- US-A- 4 120 081

## Description

The the present invention refers to A METHOD OF MOUNTING A METAL SHEET RING ASSEMBLIED AND WELDED IN A CARRIER HOOP, TO CONFORM THE ANNULAR COOLING TUBE OF A PISTON OF INTERNAL COMBUSTION ENGINE, AND A METHOD OF MANUFACTURING A FIN METAL SHEET RING ASSEMBLED WITH A CARRIER HOOP which, as regards the specific conditions of mounting herein established, achieves greater security in the cooling tube imperviousness.

More particularly, this invention contemplates a mounting of metal sheet ring assembled and welded to a carrier hoop, capable to be engaged to the pistons of the internal combustion engines conforming a cooling internal tube, usually called cooling gallery.

This invention refers to a manufacturing method especially created to conform a fin metal sheet ring of such a type that, once assemblied and welded to a carrier hoop, is coupled to the body of a piston of the internal combustion engine forming an internal cooling tube, also called cooling gallery.

As it is well known, the pistons used in the internal combustion engines, particularly in diesel engines, are subject to extreme thermal conditions and great mechanical strengths, thereby requiring long durability under severe conditions, as they are subject to important loads due to the pressure of the combustion impact and the heat being generated.

That's why various pistons designs are already known including the existence of a cooling internal tube which is generally located adjacent to the annular piping housing the top hoop of the piston; thereby, a cooling liquid, generally oil, circulates through said internal tube for the purpose of counteracting the action of the extreme temperatures that the piston and the hoops thereof are being exposed to. In order for this action to be effective, it is required that the cooling path should be the nearest possible to the piping housing the compression hoops.

Indeed, said extreme thermal conditions and mechanical stresses, make certain parts of the piston to be subject to special strengths that, due to the above mentioned reasons, may suffer damage or faults. The cooling of the most affected zones or paths, made it possible the creation of the above mentioned cooling internal tubes that configure the cooling internal galleries through which cooling oil may circulate.

Several techniques for the manufacturing of these cooling tubes have occurred, wherein different types of structures and designs are determined, said tubes being generally annular and being able to communicate with other tubes extending towards the inside space of the piston body.

The mounting of the present invention is applicable to an aluminum alloy piston for internal combustion engines, one of the type having a top circular head (piston head) and a cylindrical wall extending downwards from said head. In this case, such head, also includes the metal insert defining the annular cooling tube, arranged within the head, constituted by a carrier hoop radially extending, coaxial to the shaft of the piston body and supporting a cross sectional metal sheet ring similar to an "U" or equivalent, assembled and welded to said carrier hoop.

This invention introduces the novelty that specifically refers to the witty resource of mounting being used for the attachment and coupling of the metal sheet ring on the carrier hoop, said mounting makes sure the ring to be kept duly positioned and fixed on the carrier hoop before the welding is carried out, not being required the use of stress due to differences of thermal expansion and providing a convenient support to the welding bead.

The great advantage of the inventive mounting, is the low cost of the coupling and the great efficacy and security being achieved, above all, for the application of the continue welding bead, thereby establishing the close binding of both component parts.

Normally, the piston body is of an aluminum constitution and is molding manufactured, such that, the referred cooling tube is an insert that is located into the constitution die, previous to the tapping, to be arranged within the piston body. This insert comprises a carrier hoop that is usually cast iron with nickel and copper and the metal sheet ring of cross section such as a "U" wherein the free ends of its fins are arranged welded to said carrier hoop. Under these circumstances, the piston integrity and its structure are kept.

Accordingly, an internal annular tube is introduced, which walls are constituted by the referred metal sheet ring in "U"-shaped or its equivalent and the inside radial surface of the carrier hoop, being previously bound to each other by welding. An effective union is intended to be established such that it makes sure the non-entrance of material to the inside of the cooling tube during the aluminum tapping being carried out in the process of molding manufacturing of the piston.

In order to achieve an effective union between the metal sheet ring and the carrier hoop, it is important for the sealing welding to be hermetic and secure to avoid the entrance of aluminum to the inside of the tube, as well as the exit of hot gas from the inside to the liquid aluminum being poured during the tapping process.

In order to be sure that this welding is hermetic, it is highly important that the metal sheet ring is coupled to its respective carrier hoop without carrying stress that may affect such welding. Thus it is highly important to create metal sheet rings having dimensions extremely precise and with a final constitution that will not carry stress to the carrier hoop during the welding process.

It is contemplated that there exist several format and design options for these annular cooling tubes, said options should be in accordance with the final use the piston containing the cooling tube will have. Many of these several designs get real by means of the variations in the format of the fin metal sheet ring.

This invention specifically refers to a new method for the manufacturing of these fin metal sheet ring, wherein the referred options of design variation of the final format are also included.

### PRIOR ART

As it was previously noted, several inserts applied to the pistons, are already known, in order to provide the mentioned annular cooling tube. Special manufacturing methods have also been disclosed to justify the requirements of security and resistance capacity.

To this effect, the following patents may be cited as an example: US Patent N° 4.776.075, N° 4.586.553; or N° 3.991.811, all of which disclose respective designs of pistons with internal annular cooling galleries.

The Applicant also mentions the US Patent N° 5.903.974 referring to a method and apparatus to produce grooved hollow insert hoops for engine pistons, said hoop is arranged near the top or piston head so as to constitute an internal piping for a cooling passage adjacent to the hoop slot. Therefore, a structure is formed including a metal sheet ring which cross section takes a "U" shape and a molded carrier hoop. The molded carrier hoop is made of a high resistance material and, preferably of the same thermal expansion coefficient as the piston body. Both elements are bound by a welding bead, said bead fixes the outside part of the "U" section ring and the inside radial surface of said carrier hoop. Accordingly, the tube being adjusted for the cooling liquid circulation is defmed by said inside radial surface of the carrier hoop and the one of the metal sheet ring of "U" section.

The disadvantage, in this case, is particularly the precision required for the mutual coupling of said two pieces that conform the correct adjustment of the cooling tube such that, when used, no undesirable cracks occur due to relative movements of these elements bound by the welding bead.

Indeed, patent N° 5.903.974 establishes that the internal diameter of the carrier hoop should be slightly less than the diameter of the free ends of the "U" branches of the metal sheet ring being assemblied. To establish the union, the carrier hoop should be previously heated causing the internal diameter to expand, such that, in this way, said sheet of "U" section makes pressure and keeps itself duly positioned during the welding work.

This welding, which has neither a base nor a backing, is very difficult to be carried out. It is only possible by means of sophisticated methods that are of a very high operative cost.

Furthermore, the paths being assemblied, should be mechanized with very low tolerances such that, in any case, the interferences that should take place, are always kept.

That is to say, the thermal expansion is used to get the desired and stable positioning of the pieces to be bound, which in turn, besides being of high cost, if such binding of pieces is not carried out properly, it takes the risk that tensions, taking place during the use of the piston, may cause undesirable cracks.

Apart from the above mentioned, it is contemplated that this construction only makes possible the constitution of cooling tubes limited to a "U" cross section pattern of parallel faces, which is highly restrictive as, there exist many pistons designs of other section formats according to the various requirements.

The main problem for all these embodiments consists of achieving a very good assembly and positioning of the "U" section metal sheet on the inside surface of the carrier hoop, this being rather difficult and generally of a high cost, above all for the previous tasks of assembly, positioning and also welding that have to be carried out.

It is especially mentioned that in this mounting, no backing fitting for the welding bead that determines the union of both components, is required, said process being difficult to be carried out and insecure as regards the air tightness being required.

Different patent documents make approaches on this matter, one of them is the patent DE 26 24 412 (US 4.120.081) that discloses that a metal sheet in a flat circular crown shape, is placed on the annular cavities that the carrier hoop presents to this effect. The metal sheet is folded over the hoop and adjusted therein with a proper tool. Then, the sealing of the union is carried out by applying welding to the contact edges.

The disadvantage or inconvenient of this mounting is that the adjustment of the folding is limited by the body itself of the carrier hoop that prevents the metal sheet from being firmly adjusted before the welding.

It is not possible to assure that the metal sheet will be properly assemblied at the desired position, making adequate pressure against the body of said carrier hoop, before the welding process.

It is then safe to affirm that this patent does not disclose four aspects that are particularly taken into account in this application, namely:

A metal sheet ring (5) having the ends thereof (6) and (7) suitably placed over the notches or shallow recesses (4) without carrying stresses that affect the sealing by welding. That is to say, it does not disclose how to get rid of the stresses typical of the material, which are generated by the folding process of the fin (7) until it is finally positioned on the seat thereof (4).

It neither discloses nor suggests how to obtain other "U"-shaped cross sectional designs for the metal sheet ring other than designs having straight fins that are perpendicular to the support hoop.

It is especially noted that this prior disclosure discloses merely in a partial way how to conform cooling tubes, them being limited to a "U"-shaped cross sectional constitution having parallel faces, which is exceedingly restrictive inasmuch as there exist many piston designs having similar section formats according to various requirements.

In the disclosure made in the above-mentioned documents neither is it disclosed how to ensure that the ends (6) and (7) of the metal sheet ring become firmly adjusted and suitably positioned before proceeding with the welding. It is especially noted that for the final mounting, prior to the welding process, it is indispensable to give a great dimensional precision to the aforesaid ends (6) and (7) in order to make sure that a precise coupling is achieved and that any kind of welding is accepted. Otherwise, minute flaws are transferred to the welding rendering sealing imperfect. Since a carrier body (1) is used as support for the shaping of the ring, it is not possible to adjust the said final measure in the free ends of the metal sheet ring.

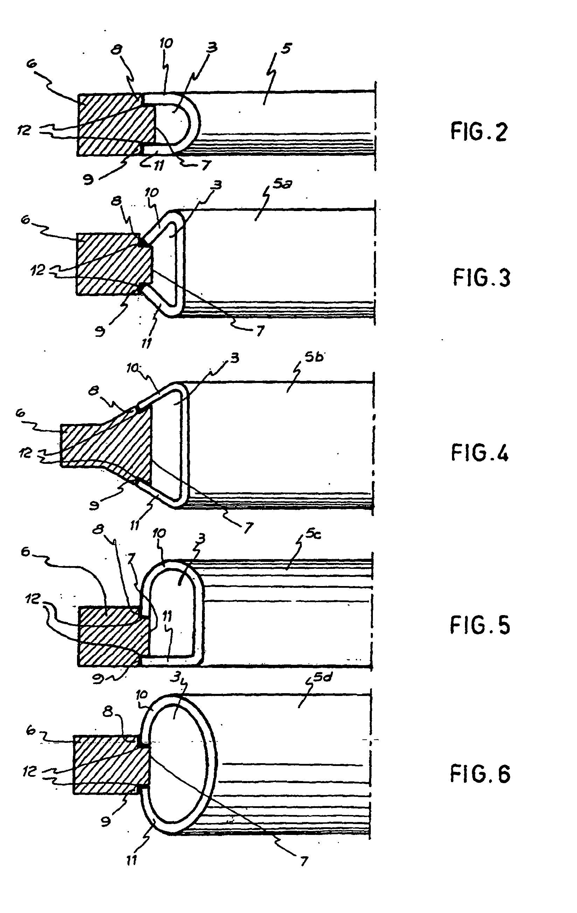

It is very important to stress the fact that in order to provide the metal sheet ring with a cross sectional "U" shape, as shown in figure 4, it is necessary a stamping process that requires the use of lubricants because such process generates great material deformation. Lubrication is required to prevent the great rubbing generated from affecting, to a large extent, the thickness of the fin being conformed and to guarantee the life of the constitution die.

The problem is that the lubricant used, however little lubricant is used, negatively affects the final welding process that forms the seal over the support hoop.

The lubricant contaminates the walls of both the support hoop and the metal sheet ring. The lubricant has to be removed by means of washing and drying prior to the welding in order to ensure that the welding operation and the subsequent aluminum bath (alfinization or aluminization), which is performed before being poured into the piston, take place free of contaminants.

However, in respect of the "washing" there are two problems, namely, a) it affects the surfaces washed, that is, the inside ring surfaces of both the ring and the metal sheet ring thereby generating significant faults in the subsequent "aluminization"; and b) the "washing" is not currently allowed because it is a process that contaminates the environment.

It is for the above reason that this mounting means has been discarded and the industry has now looked for other solutions, such as those disclosed by US patents nos. 6.105.540, 5.903.974, 4.776.075, 4.586.553 and also Japanese patent no. JP 5-231539, 6-210383.

US Patent N° 6.105.540 is also mentioned as part of the prior art and discloses a cooling annular mounting applicable to an internal combustion engine, that comprises a cooling tube conformed by a metal sheet welded to a supporting carrier hoop.

The novelty introduced by this US patent is that, in this case the metal sheet having a "U" section keeps itself pressing on the inside annular surface of the carrier hoop and is not contracted by the temperature differences between the hoop and the cooling tube. That is to say, it takes advantage on the previous embodiments as expansion differences are not being taken into account for the mounting of the metallic hoop in the carrier ring.

The object of this US Patent N° 6.105.540 is to provide an insert for the adjustment of the cooling tube to make sure an adequate positioning of the metallic hoop on the carrier ring before the welding process, such that a firm and secure welding joint is established between the carrier hoop and the metal sheet ring.

Said invention contemplates that the precise and stable assembly should be made by using tools applying temperature on the metal sheet ring, though mentioning that the application of temperature differences may be omitted.

The basic idea disclosed and covered by this US patent N° 6.105.540 is to use the properties of "certain elasticity" of the metal sheets to help their positioning in the carrier hoop, keeping themselves with certain pressure against the inside radial surface of the hoop such that the welding process may be properly carried out.

It is thereby established as a condition that the angle between the inside surface/s of the carrier hoop and the branches of the "U" of the metal sheet ring should be less than 45°, due to the fact that if this measurement is exceeded, the mounting will not be benefited by the referred "elasticity".

Though, as from this constructive principle of mounting, advantages occur as compared to what previously known, by analyzing it in itself, some disadvantages may appear that are clearly overcome with the mounting of the present invention.

Indeed, it is contemplated that for the mounting disclosed by US patent N° 6.105.540, it is required that the "U" profile being formed with the metal sheet ring should be symmetric as, otherwise, the pressure over the inside surface of the carrier hoop will avoid a correct positioning.

It is also contemplated as a limit to this background the condition that, the walls of the channel defining the metal sheet ring should always keep a compressive stress. If this condition is not met before and during the welding process, such process may be affected.

Again, it is contemplated the limitation establishing the condition that both fins of the "U" profile of the metal sheet ring should constitute an angle less than 45°, with respect to the plane of the inside surface of the carrier hoop supporting them.

It is also noted such limitation about that the inside surface/s of the carrier hoop should not generate a truncated cone seat for the ends of the fins of the "U" profile that conforms the metal sheet ring.

It is especially noted that the carrier hoop should not present pairs of inside radial surfaces defining seat steps for the free ends of the fins of the metal sheet "U" profile due to the fact that the difference of the diameters between the free ends of said fins and the inside surfaces of the support hoop should be at a minimum. If said steps are not present, the welding of the fins is carried out without support, which is not certainly secure.

It is especially noted that whenever an assembly is carried out as the one achieved with the mounting disclosed by patent N°6.105.540, the welding bead that fixes said assembly will not have a stable backing as the supports of the free ends of the fins of the "U" profile of the metal sheet ring have a reduced surface, in this case a welding may be carried out only with a great material supply.

Accordingly, any alteration to the established compressive stress, that may be caused by the temperature variation, affects directly the welding bead.

According to this prior art, there exists some background that disclose processes for the manufacturing of these metal sheet rings.

Japanese Patent JP-A-5-231539 is a background of this art, said patent discloses a structure including a metal sheet ring of a cross section in "U"-shaped and a molded support hoop, that are coupled by the welding of the ends of the metal sheet ring and the inside part of the support hoop.

This document discloses that the metal sheet ring is created by rotating the metal sheet having the same thermal expansion coefficient of the material of the piston body.

Indeed, as it is also disclosed by US Patent No. 5.903.974 to Kenji Nakajima, these metal sheet rings of a "U" cross section that has up to now been manufactured from stainless steel sheets of 18 mm width, 290 mm length and 0.6 mm thickness for example, which are curved using roll manufacturing machines. Once curved, said sheet is placed on a template of circular cross section and welded in its free ends to constitute a circular ring. By means of these rotating manufacturing machines, this ring acquires a "U" cross section.

As a complement to what previously disclosed, the Japanese patent application JP-A-6-210383 states: A cylindrical sheet, obtained by welding the free ends of curved sheet, is winded in a roll manufacturing machine to adopt the format of a circular collar of "U" section. Then, said collar is arranged in a rotating machine getting the predetermined dimension according to the inside diameter of the hoop. In a further step, the sheet having a ring-shaped passes through a machine that will remove the roughness from the edges of the circular collars ends that were formed during this process.

US Patent N° 5.903.974 also discloses that, as a conventional technique for the manufacturing of these sheet metal rings the use of three different machines: a roll, a rotating device and a cutting down device (a polishing device for the purpose of removing surface roughness or irregularities). These machines are not assemblied but should rather be placed one after the other one occupying a big space. This represents a high cost of installation. Nakajima states that with the conventional technique no metal sheet rings can be effectively produced.

The novelty disclosed by US Patent 5.903.974, is a machine to produce these metal sheet rings that includes the steps to place a cylindrical hoop into a receiver slot, such that while the die rotates with the cylindrical hoop being in a movable position, a roll makes pressure on said hoop forming the collars that confers the "U" section format to the hoop. Then each ring, so preformed, is arranged such that a cutting machine acts over the free edges, while the die supporting it rotates, making the edge smooth, that is removing the folds and the rough edges that may exist.

The above US patent no. 5.903.974 presents the novelty of getting one single machine to fully conform the metal sheet ring. That is to say, what previously took the use of three machines, can now be achieved with one, the method and steps for its manufacture are still basically the same as those disclosed in the above-mentioned Japanese patents. Hence, they are costly and require a great many tools.

It is also contemplated that it is a machine or process especially designed to make rings of "U" profile with straight fins. In case another profile design or cross section is required, other construction die especially designed for each case, should be introduced, thus considerably increasing the manufacturing costs.

It is also contemplated that in each case, it refers to processes that combines rotating dies with pressure roll, that change a cylindrical ring into a ring of "U" profile.

It is also contemplated that all these specifications refer to cylindrical rings constituted from curved sheets that are then welded by their free ends.

It is also cited US Patent no. 1.428.777 which discloses the final stages for forming a metal sheet ring, although it is to be noted that this ring is not suitable for the application or purpose that this application refers to.

Furthermore, with the method disclosed by this patent it not possible to conform a metal sheet ring such as the one required for the mounting disclosed in this application.

Indeed, if we analyze this prior disclosure, we can see that the disclosed shaping method is clearly described in columns 1 and 2 (lines 35 through 57) when referring to figures nos. 3 and 4. Especially in the last stage (lines 53 through 57) that reads: "After the member or element shown in Fig. 3 has been formed, the washer (6) is placed over the cylinder (9) and against flange (10) after which the cylinder is turned out to complete the gasket as shown in Fig. 4."

It becomes evident that, as set forth above, the referred to washer (6) becomes lodged inside the ring as an integral part of the gasket. It is then not possible to remove the washer (6).

It is safe to affirm that the referred to washer (6) acts as an internal die for shaping the ring.

It is precisely the presence of the said washer (6) occupying the internal space of the ring that prevents the ring from being applied with the purpose that this application refers to (conforming the lateral walls of a tube or closed gallery through which a cooling fluid can freely circulate).

The above mentioned object of the invention can be achieved by a method according to claim 1 or claim 6.

As it was previously mentioned, the mounting referred to herein is applicable to an aluminum alloy piston for internal combustion engines, of the type having a top circular head (piston head) and a cylindrical wall extending downwards from said head. In this case, said head also includes the metal insert defining the annular cooling tube, arranged within the head, constituted by a carrier hoop radially extending, coaxial to the shaft of the piston body and supporting a metal sheet ring of cross section similar to a "U", assembled and welded to said carrier hoop.

The novelty introduced by this invention, specifically refers to the witty resource of mounting that is used for the binding and assembly of the metal sheet ring on the carrier hoop, said assembly makes sure the ring to be kept duly positioned and fixed on the carrier hoop before the welding is carried out, not being required the use of stress due to differences of thermal expansion and providing a highly convenient and secure backing to the welding bead.

It is therefore a mounting that requires only a minute final deformation so that the fins of the metal sheet ring become positioned with great precision, regardless of the angle used to design them.

It is a mounting that is fully performed in dry and germ-free conditions, without any kind of lubricant, which ensures that the subsequent welding process is carried out over contaminant-free surfaces, both in the metal sheet ring and the support hoop, so that the aluminization and subsequent casting in the aluminum-alloy piston becomes efficacious.

It is a mounting that is put into practice with the final clean and germ-free piece being coupled, without the need of any kind of washing whatsoever.

The first novelty that makes this embodiment standing out from all those that are presently already known is that the carrier hoop provides, for the seat of each of the paths of annular edge of the metal sheet ring, a surface support that is defined in a diametrical plane and also a surface support being defined in an axial plane. Both surfaces of support, are inside surfaces of the carrier hoop that constitute an angle to each other, being their diameters superior to the diameter of the inside surface of the same hoop defining between both of them.

As from this constructive principle, the invention contemplates that the referred seats may present an oblique orientation for those cases wherein the required metal sheet ring has the fins constituting a truncated cone (without restriction of angle setting).

Accordingly, these surfaces, defining said seats of the metal sheet ring, are arranged separated of each other, by a path extending towards the inside space of the hoop, thus constituting one of the inside surfaces of the cooling tube being conformed.

As from the above mentioned, it is clear that a double support seat is created to benefit the support to the welding bead, being a part thereof.

This advantage is possible due to the novelty constructive solution established for the mounting of the metal sheet ring on the carrier hoop. Indeed, in order to carry out the adequate and stable mounting, the ring is presented and positioned in the carrier hoop body without its final format.

A preformed ring is created wherein one of the fins of its "U" cross section is open at an angle larger than the other one. Under these circumstances, the diameter of the free end of one of the fins is, at least, similar to the diameter of the inside surface of the carrier hoop where said fin stops; while the diameter of the free end of the other fin, is substantially less than the diameter of the inside surface of the carrier hoop where said fin stops.

Under these circumstances, when the preformed ring is positioned, one of the fins thereof will be arranged in its seat place, while the other one will keep slightly separated of its seat having a minor diameter. By using an adequate tool, a compression action will be made over the ring to take said fin open, up to the time said fin locates at the corresponding seat of the carrier hoop and stops.

Tests already carried out show that, as mentioned, this mounting is highly effective as the metal sheet ring keeps positioned, without stress and stable such that the welding process may be carried out. An ideal positioning is achieved without generating thermal expansions and no undesirable stress is caused when coupling. It is a clearly mechanical assembly.

It is particularly noted that this inventive mounting allows that the profile or cross section of the metal sheet ring may respond to different designs and dimensions, due to the fact that by introducing the constructive condition of generating the ring preform, in the above mentioned way, to allow the coupling to the carrier hoop, it will always be possible to carry out the mounting under desirable conditions for the further and final welding process.

Accordingly, it is contemplated that this inventive mounting allows the mounting of metal sheet rings of "U" section or equivalent, wherein the fins of the "U" form an acute angle with the cross web binding them; they are convergent fins.

It is also noted that this invention allows the mounting of metal sheet rings where one of the fins is longer than the other one, in such a way, that the width of the cooling tube being conformed, is greater than the height or thickness of the carrier hoop.

It is also noted that, as a consequence of the inventive mounting, the seats being defined by the carrier hoop to support the free ends of the fins may be parallel or oblique to the horizontal plane of the assembly, that is to say, truncated cone seats.

It is also noted that, as a consequence of the inventive mounting, "U" section metal sheets or equivalents are possible to be defined, having the fins thereof different curvature degrees with different ratios and angles.

It is also noted that, as a consequence of the inventive mounting, "U" section metal sheets or equivalents may be designed, such design determines that the cooling tube should be arranged disaligned with respect to the symmetry axis of the carrier hoop.

It is also contemplated that the double support of the sheet fins, constitute a highly secure backing to any type of welding with or without a third material supply.

Accordingly, the main object of the present invention may be defined as follows: AN MOUNTING OF METAL SHEET RING ASSEMBLED AND WELDED ON A CARRIER HOOP TO CONFORM THE ANNULAR COOLING TUBE OF A PISTON OF AN INTERNAL COMBUSTION ENGINE, wherein the mounting consists of a metal sheet ring, which cross section comprises a web extending between two fins projecting towards the carrier hoop such that, the free ends thereof rest and couple to the annular seats being defined in the inside face of the carrier hoop, matching their curbs of internal edge; where said support and coupling are sealed by respective annular welding beads extending along the mentioned annular seats and rest in the carrier hoop body, being conformed an inside annular cooling tube which inside surface is constituted by a metal sheet ring and the inside diametrical surface of the carrier hoop extending between said two annular seats.

The invention contemplates that the fins of the metal sheet ring should be oriented in convergent direction towards the carrier hoop.

It is also contemplated that the fins of the metal sheet ring should be oriented perpendicular to the carrier hoop.

It is also contemplated that the body of the carrier hoop should be of a truncated cone cross section and the fins of the metal sheet ring should be oriented in convergent directions towards the respective annular seats of the carrier hoop.

It is also contemplated that one of the fins of the metal sheet should be oriented in perpendicular direction to the carrier hoop body and the other one follows a curved line and then reaches a final straight path extending up to the seat, which is in cross sectional direction to the carrier hoop.

It is furthermore contemplated that both fins of the metal sheet are curved with the end paths thereof oriented in cross sectional direction towards the carrier hoop.

On the other side, it is contemplated that the height of the metal sheet ring may be higher than the height of the carrier hoop.

It is also contemplated that the annular welding beads that rest on the carrier hoop are defined on the annular seats of said hoop, confined in a double backing support.

Furthermore, for the coupling of the metal sheet ring into the carrier hoop, said ring previously presents one of its fins tear down having an angle greater than the other one, in such a way that the diameter of its free end is less than the diameter of the free end of the other fin, while, after the coupling this tear down fin is pressed against the carrier hoop body adopting its final position and format.

It is also contemplated that for the coupling of the metal sheet ring into the carrier hoop, the diameter of the free end of one of the fins, is less than the internal diameter of the carrier hoop.

Furthermore, the method to manufacture the fin metal sheet ring referred to herein, is clearly distinguished from all the others currently known as no expensive machines are required due to the fact that said ring is constituted by using known and conventional dies and tools.

It is whereby eliminated the need of using means to produce the rotation of the piece being conforming, together with conformed rolls, thus requiring high costs on machineries, fittings and labor.

It is hereby eliminated the need of cylindrical rings constituted by curved sheets having ends attached by welding. By avoiding the welding, possible damages or faults due to a bad welding is also avoided.

To constitute the inventive ring, a flat metal sheet commercially available in the market is used.

This brings the advantage of selecting, without any inconvenient, different thickness degrees of the sheet with respect to the desirable thickness to form the wall of channel "C".

It will also be possible to select different type of materials, as for example different qualities of stainless steel and/or carbon steels.

The inventive process allows to adjust the profile design of the ring with respect to the need to establish the final design of the cooling channel being conformed.

No previous welding is required for the ring manufacturing, thus eliminating, from the beginning the possibility of welding faults.

It is contemplated that this is a fully novel performance, as a stamping method from a flat metal sheet, preferably circular, is used.

Accordingly, the main object of the present invention is a METHOD TO MANUFACTURE A FIN METAL SHEET RING CAPABLE TO BE COUPLED TO A CARRIER HOOP AND CONFORM THE ANNULAR COOLING TUBE OF A PISTON OF AN INTERNAL COMBUSTION ENGINE, that comprises the following steps: take a flat metal sheet of a desired thickness, and cut it creating a circular disk; produce, by stamping on said disk, a circumferential wall having a folded edge of diverging fin; cut and remove the circular bottom, by stamping the piece being constituted in the previous step; take the ring constituted in the previous step and form a second folded edge of diverging fin by stamping the circular edge opposite to the one already existing in the first diverging fin; place the fin ring produced in the previous step in a rotating support and submit said ring to a final calibration by means of cutting tools that act on the circumferential edges of both fins.

It is also contemplated that, the stamping dies comprise a support piece and a stamping tool wherein the cooperating active surfaces, that lock the metal piece being acted on, present peripheral paths having structures that respond to the foreseen design for the metal sheet ring being formed.

It should be noted that the cutting action produced on the metal sheet in the first step, is carried out by a circular cut-die by stamping.

The present invention refers to, as a secondary object, A FIN RING OF METAL SHEET, obtained by means of the described method and consists of a sole body of metal sheet, which cross section is a "C" profile having diverging fins that respond to different pre-established designs.

It is also noted that the different pre-established designs for the diverging fins of the metal sheet ring may have different orientations, curvatures and dimensions thereof.

### BRIEF DESCRIPTION OF THE FIGURES

In order to complete the above mentioned advantages, it will be apparent for users and those skilled in the art that many other ones may be added in order to facilitate the understanding of the constructive, constitutive and functional features of the inventive mounting, a preferred example of embodiment is described below, which is schematically illustrated with no specified scale, in the enclosed figures, clearly stating that, just for being an example, it doesn't intend to limit the scope of the present invention, but only to help as an illustration of the basic principles thereof.
Figure N°1 is a partial lateral view complemented by a vertical section of the body constituting a piston of the internal combustion engine.
Figure N°2 is a cross sectional view representing the inventive mounting, showing the case wherein the fins of the metal sheet ring of "U" section are straight and parallel to each other.
Figure N°3 is a cross sectional view representing the inventive mounting, showing the case wherein the fins of the metal sheet ring of "U" section are convergent.
Figure N°4 is a cross sectional view representing the inventive mounting, showing the case wherein the body of the carrier hoop presents obliquely oriented seats (truncated cone construction) due to the fact that the fins of the metal sheet ring are convergent towards said seats.
Figure N°5 is a cross sectional view representing the inventive mounting, showing the case wherein the cooling tube conforming the metal sheet ring is of a height greater than the height of the body of the carrier hoop. Said tube is arranged disaligned with respect to the symmetry axis of the carrier hoop.
Figure N°6 is a cross sectional view representing the inventive mounting, showing the case wherein the fins of the metal sheet ring are curved.
Figure N°7 is a vertical section scheme, showing the metal sheet ring of "U" profile and parallel fins as it is represented in figure N°2, in this case preformed for its positioning into the carrier hoop, before the final assembly, being the diameters of the free ends of the fins different to each other.
Figure N°8 is a vertical section scheme, similar to the one of the previous figure, representing a profile of the metal sheet ring as it is represented in figure N°3, in this case preformed for its positioning into the carrier hoop, before the final assembly, being the diameters of the free ends of the fins different to each other.
Figure N°9 is a vertical section scheme, similar to the one of the previous figures, showing the case wherein the seats of the carrier body are oblique and oriented in diverging direction and a metal sheet ring such as the one represented in Figure N°4, is arranged preformed for its positioning into the carrier hoop, being the diameters of the free ends of the fins different to each other.
Figure N°10 is a vertical section scheme, similar to the one of the previous figures, showing a metal sheet ring such as the one represented in Figure N°5, in this case preformed for its positioning into the carrier hoop, being the diameters of the free ends of the fins different to each other.
Figure N°11 is a vertical section scheme, similar to the one of the previous figures, showing a metal sheet ring of "alveolar" profile (continue curve) such as the one represented in Figure N°6, in this case preformed for its positioning into the carrier hoop, being the diameters of the free ends of the fins different to each other.
Figure N°12 is a vertical section scheme showing the way the final positioning of the pieces constituting the cooling tube is carried out, being mounted according to the present invention.
Figure N°13 is a vertical section scheme showing the way the welding process on the already positioned pieces is carried out.
Figure N°14 is an enlarged detail, in vertical section showing the carrying out of the coupling of the edge of free end of a fin of the metal sheet ring on the corresponding assembly seat defining the carrier hoop, so that the welding process may be carried out.
Figure N°15 is an enlarged detail, in vertical section, similar to the one of the previous figure, in this case showing the constitution of the annular welding bead binding both pieces in a fixed and secure way.
Figure N° 16 is a perspective view showing a fin metal sheet ring that may be conformed by the method herein.
Figure N°17 is a side view, complemented by a vertical section of the body that constitutes the piston of an internal combustion engine.
Figure N°18 is a cross sectional detail showing the insert being introduced to the piston body to constitute the annular cooling tube.
Figure N°19 is a schematic view showing the first step to conform the fin metal sheet ring, according to the method herein for the case wherein the cross section of the fin ring being conformed, is like a "U" with straight branches.
Figure N°20 is a vertical section scheme representing a step to conform the fin ring, subsequent to the one represented in the previous figure.
Figure N°21 is a vertical section scheme representing another step of conforming the fin ring, subsequent to the one represented in the previous figure.
Figure N°22 is a vertical section scheme representing another step of conforming the fin ring, subsequent to the one represented in the previous figure.
Figure N°23 is a schematic view showing the first step to conform the fin metal sheet ring, according to the method herein, for the case wherein the cross section of the fin ring being conformed, is like a "U" of curved branches.
Figure N°24 is a vertical section scheme representing a step to conform the fin ring, subsequent to the one represented in the previous figure.
Figure N°25 is a vertical section scheme representing a step to conform the fin metal sheet ring, subsequent to the one represented in the previous figure.
Figure N°26 is a vertical section scheme representing a step to conform the fin ring, subsequent to the one represented in the previous figure.
Figure N°27 is a vertical section scheme representing a step to conform the fin ring, subsequent to the one represented in the previous figure.
Figure N^{a}28 is also a vertical section scheme that, in this case, represents the adjustment or calibrating step of the diameters of the fins of the "U" channel of the fin ring being conformed according to the method herein, in case it is required.
Figure N°29 is a vertical section scheme that, in this case, shows that with this inventive method, it is possible to conform a fin ring capable of coupling to a support hoop such as the one represented in figures 31 and 32.
Figure N°30 is a vertical section scheme representing a step to conform the fin ring, subsequent to the one showed in the previous figure.
Figure N°31 is a vertical section scheme showing the fin ring conformed according to figures 14 and 15, when it is presented in the carrier hoop for its mounting.
Figure N°32 is also a vertical section scheme showing the final mounting of the fin metal sheet ring in a preferred carrier hoop, according to the inventive method.

It should be noted that, in each figure, same referential numbers and letters correspond to the same or equivalent constitutive parts or elements, according to the example selected for the present explanation of the inventive manufacturing method.

### DETAILED DESCRIPTION OF A SELECTED EXAMPLE

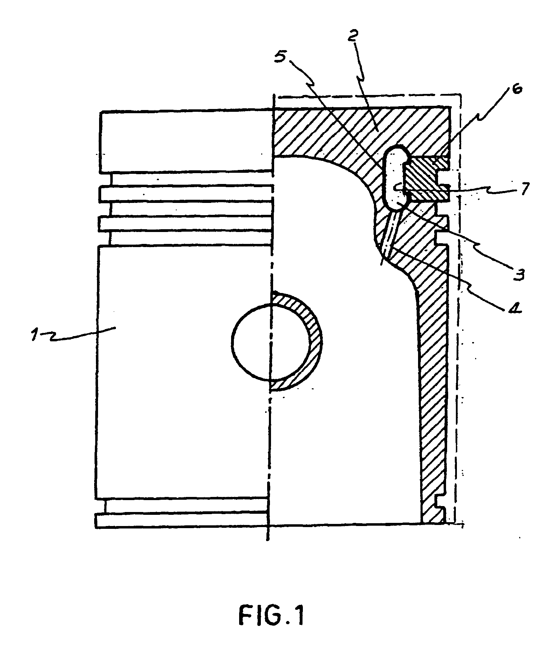

As it can be contemplated in Figure N°1, the mounting referred to in the present invention, is intended to be applied to the pistons -1- being used by the internal combustion engines.

As it is well known the piston, together with the hoops (not illustrated), should effectively seal the combustion chamber avoiding the entrance of hot gas and lubricant oil at any work condition. On the other side, it is already known that portion -2- usually called piston head is the one more exposed to the thermal and mechanical requirements. Therefore, there currently exist various pistons that include cooling galleries -3- arranged in the body of each head -2-.

The purpose of these cooling galleries -3- is to counteract the heating in said zone when the temperature is excessive. Thus, a cooling liquid, such as the engine oil, circulates through said internal tube -3-, that by passing through tubes -4- keeps communication with the inside of the piston. That is to say, a certain amount of the lubricant oil itself stirring with the piston movement, also enters into the internal cooling tube -3- absorbing the heat of the inside of the head body -2-.

Normally, the piston body is of an aluminum constitution and is molding manufactured, while the mentioned cooling tubes -3- are formed with a metal sheet ring -5- welded to a carrier hoop -6- that is usually cast iron with nickel and copper, said cooling tubes are placed into the constitution die, previous to the tapping, such that they are kept into the inside of the piston body. Under these circumstances, the piston integrity and its structure are kept.

As it is contemplated in said Figure N°1, the cooling tube -3- is an annular tube which walls are constituted with the referred metal sheet ring and the internal radial surface -7- of the carrier hoop -6-.

What the present invention specifically intends to cover is the mounting that has been created such that the constitution of the cooling tube -3- by the welding union of the metal sheet ring 5- with its carrier hoop -6- may be effective, of low cost and above all, make sure the non-entrance of aluminum during all process of the piston tapping.

Preferably, the set of pieces constituting the mounting of this invention, has the same expansion coefficient as the aluminum.

Indeed, as it is shown in figures 2 through 6, the mounting achieved is prominent as the carrier hoop -6- presents two annular seats -8- and -9- matching its inside face. These annular seats are similar, opposite and symmetric to each other and keep separated to each other by a body path of the same carrier defining the inside radial surface -7- of the annular cooling tube -3- being constituted.

The presence of these seats -8- and -9- results interesting as in each of them a double support is established for the free ends of the fins -10- and -11- of the folded metal sheet ring -5-. One of the supports is the annular surface in a diametrical direction and the other one is the annular surface in axial direction that conforms the annular seats -8- and -9-.

In this way, what is achieved is that the welding, establishing the union of both pieces -5- and -6-, provides an hermetic closure that avoids the entrance of aluminum to the annular cooling tube -3- or the exit of hot gas from the inside of said tube -3- towards the liquid aluminum recently poured into the mold, as these effects generate the rejection of the piston that is being constituted.

As it is shown in said figures 2 through 6, the mentioned double support for each annular seat -8- and -9- is prominent due to the fact that said annular seats make sure the welding will be supported on body of the carrier hoop, which is highly advantageous for the ability to resist any type of mechanical solicitudes as well as the stress that generate whenever temperature changes occur. That is to say; the welding bead -12- always acts as a sealing mean and the body of the carrier hoop provides the mechanical resistance.

What is established in the previous paragraph is highly noted due to the fact that there exist many cases wherein the free ends of the fins of the ring -5- rest upon axial surfaces of the carrier hoop -6-, constituting lineal supports, such that the welding bead is also the closure backing, and therefore the seal being constituted should be well achieved, as otherwise any relative movement produced by the behavior of the materials due to high temperatures may generate cracks.

In these six figures (2/6) different design options are shown that respond to the constructive principle indicated in the two previous paragraphs and, in turn, each of them adapts to different constitution criteria for the cooling tubes -3- that are required by the suppliers. These figures show that the inventive mounting allows different designs of cooling tube -3-. Accordingly, it is applicable to the different market requirements.

The case represented by figure N°2, shows that the metal sheet ring 5- is of "U" section of straight fins perpendicular to the carrier hoop body -6-, so that the free ends of fins -10- and -11- rest and stop at the mentioned seats -8- and -9- provided by the carrier hoop -6-.

Figure N°3 shows that the metal sheet ring -5a-, in this case, has fins -10- and -11- in convergent direction towards the carrier hoop body, so that the cooling tube -3- being constituted is of a trapezoidal cross section.

Figure N°°4 shows that the metal sheet ring -5b-, in this case, rests on a carrier hoop -6- of truncated cone cross section; accordingly, the annular seats -8- and -9- thereof are oriented in diverging direction, such that the cooling tube -3- being constituted, is also of a trapezoidal cross section and of a major height than that of the mentioned carrier hoop -6-.

Figure N°5 shows another variant of the design of the internal cooling tube -3- whish is possible to be achieved with the inventive mounting. In this case, the fin -11- of the ring -5c- is straight and is oriented perpendicular to the seat -9- of the carrier hoop -6-, while the fin -10- starts at a curved path and finishes perpendicular to the diametrical surface of both surfaces constituting the seat -8-. In this case, a cooling tube -3- is also constituted which having a greater height than that of the carrier hoop -6-.

Figure N°6 shows another variant of the design of the internal cooling tube -3- whish is possible to be achieved with the inventive mounting. In this case, the mentioned fins -10- and -11- of the ring -5d-, extending along the respective curves that finish in convergent lines oriented perpendicular to the diametrical surface of both surfaces constituting the mentioned supports -8- and -9- of the carrier hoop -6-.

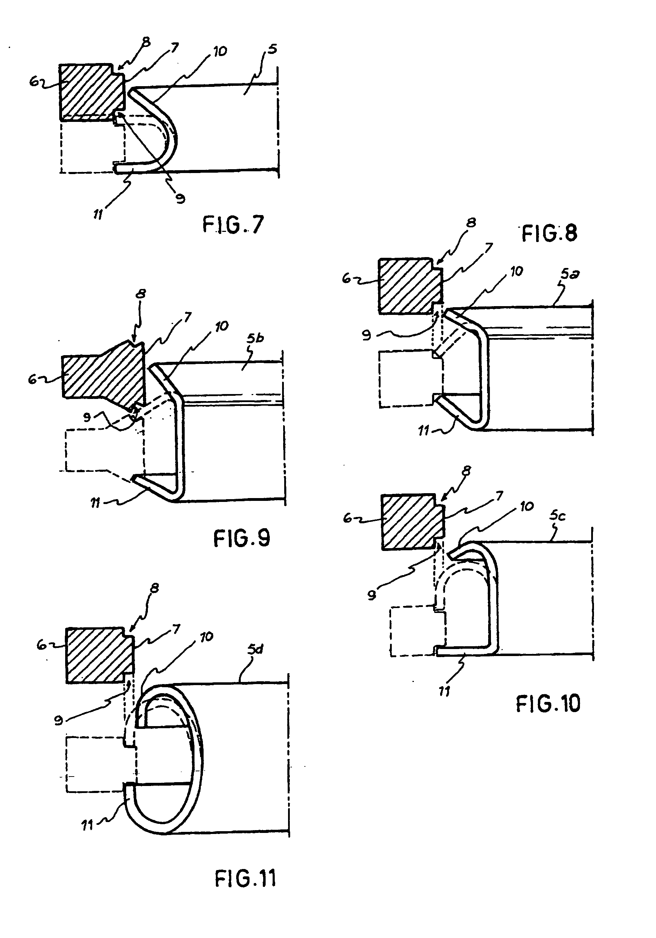

Now turning to figures 7 through 11, it is possible to understand the constructive solution reached to create the inventive mounting in a simple, quick, of low operative cost and secure way.

Now turning to the section shown in figure N°7, it is possible to understand that the diameter that determines the free end of the fin -10- is shorter than the diameter determining the free end of fin -11- and that the curvature angle with respect to the main web where from the fin -10- is projecting, is larger than the curvature angle where from the fin -11- is projecting.

It is then a preformed metal sheet ring -5- wherein the length of the projection of fin -10- is shorter than the length of the projection of fin -11-, being this constructive condition highly useful to produce the coupling of the support hoop -6- to this metal sheet ring -5-.

Indeed, now turning also to Figures Nos. 7/11, it will also be understood that the dimensional relation explained in the two previous paragraphs allows ring -5- to enter to face the inside annular face of the carrier hoop -6-. This is due to the fact that the diameter of the free end of fin -10- is always slightly less than the diameter of the path of the radial surface -7- that, pertaining to the support hoop -6-, extends between seats -8- and -9-.

This simple constructive solution resolves, in a highly effective way, the coupling of pieces -5- and -6-.

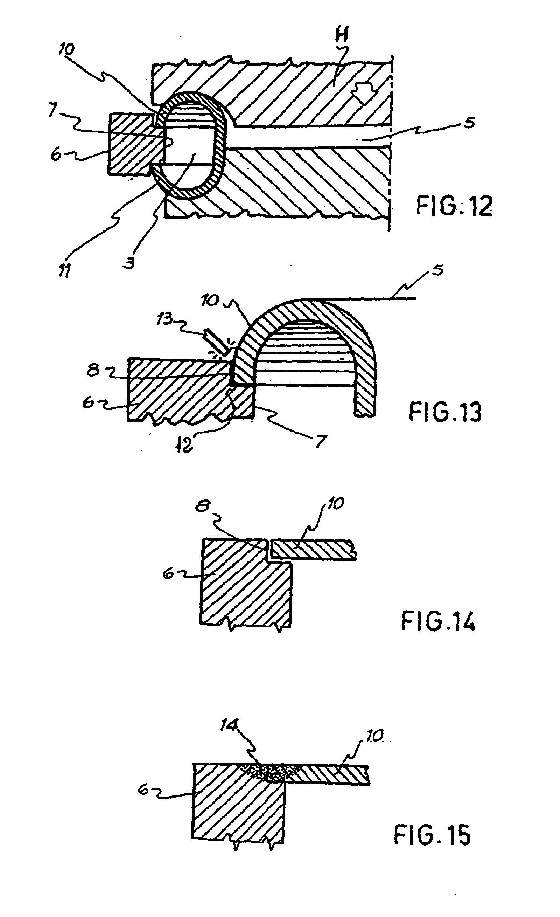

Figure N°12 shows that, once coupled both the ring -5- and the carrier hoop -6-, only the final stamping on fin -10- will be required to be carried out. Fin -11- keeps positioned having its free end resting on seat -9-, while tool -12- makes pressure on fin -10- causing its free end to be properly positioned on the annular seat -8-.

Said Figure N°12 shows that the metal sheet ring -5- keeps very well positioned and stable on the carrier hoop -6- bringing a final constitution to the annular cooling tube -3-, being fins -10- and -11- without stress.

The enlarged detail represented by figure N°13 is, precisely, to show the way the welding process -13- to establish the final union between both pieces -5- and -6- is carried out.

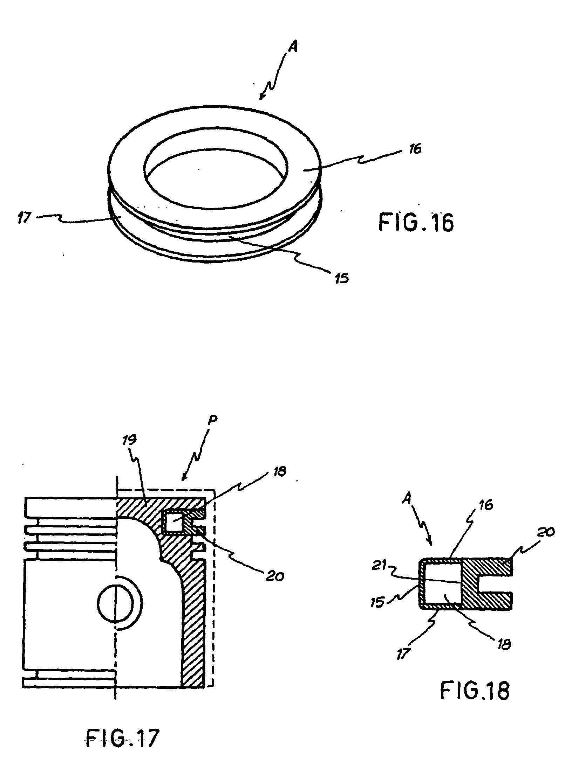

Indeed, as it is shown in the enlarged details of figures 14 and 15, what makes this mounting different from the other ones currently known, is that the body of the carrier hoop is used as a support to the welding bead -14-, such condition making sure the mounting to be highly stable and secure.

In this preferred example, a welding bead -14- (Figure 15) is shown, said bead is made by a gas embedded voltaic arc. Thus, a bead -14- is generated, constituted by the free end of fin -10- and a portion of the carrier hoop 6- that comprises the annular seat -8- (Figure 14). It is an annular seal constituted by the materials provided by said coupled paths and also a third material may be included in case of being required.

Obviously, this type of coupling also allows the use of other types of welding, such as the electronic beam, high frequency, microplasma, etc. in each case with or without material supply.

The manufacturing method referred to herein has been created to constitute the fin ring -5- that is represented in figure N°16. It is a metal sheet ring such as the ones previously explained to describe the invented mounting.

Now, in order to explain in detail the invented method for the manufacturing of said ring, it is described as a ring that comprises a web -15- where from respective fins -10- and -11- are projecting to conform an annular channel which dimension and format define the basic structure that the annular cooling tube being constituted there from, should have.

Figure N°17 shows the scheme of a piston -1- for an internal combustion engine. They are generally made of aluminum and molding manufactured, and include an annular cooling tube -3- extending matching the top part -2- of the piston.

As it was previously indicated, the purpose of these annular cooling tubes is to counteract the heating of said top zone when the temperature is excessive. Thus, a cooling liquid circulates through said tube, such as the lubricant oil stirring with the piston movement.

The section represented in figure N°18 shows the way these annular cooling tubes -3- are constituted according to prior disclosures and also according to embodiments currently existing in the market. A fin metal sheet ring -5- attached to a support hoop -6- may be appreciated.

Said figure N°18 clearly shows the annular cooling tube being defined, it comprises the inside surface -7- of the carrier hoop, the fins -10- and -11- and the web -15- of the metal sheet ring -5-.

It is an object of this invention a novel method for the construction of the referred fin metal sheet ring -5- to be then attached, by welding, to the carrier hoop -6-constituting an annular cooling tube capable of being effective in the inside of the piston body.

In this preferred example it is shown the case wherein the fin ring -5- responds to a pattern which cross section is a "U" of straight and parallel branches. However, it is noted that the inventive manufacturing method is created to conform other fin rings of variable formats and designs. As it appears from the functional explanation below described, it will only be required to change the stamping dies.

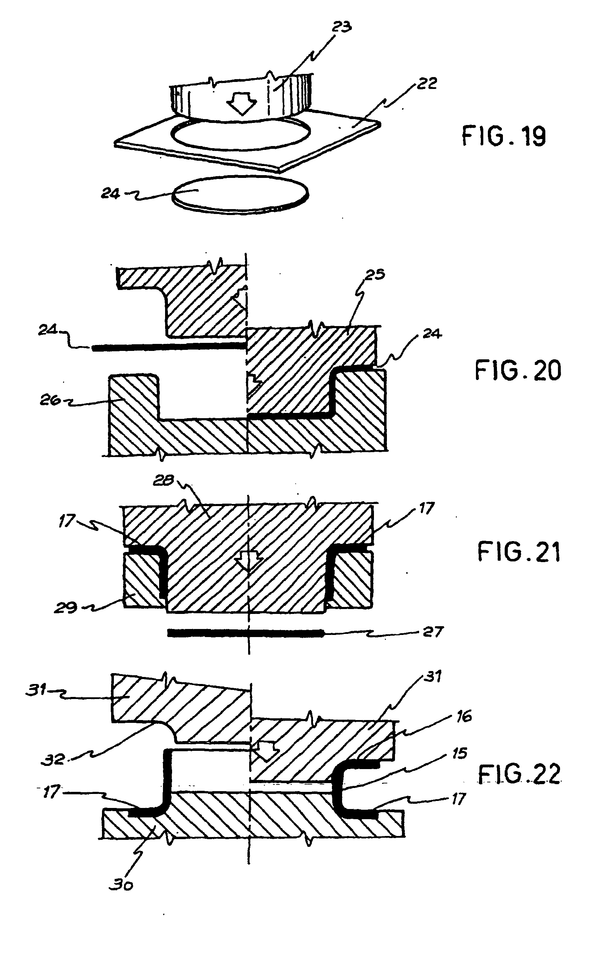

Figures 19 through 22 represent the steps of the process to create the ring -5- with straight and parallel branches to each other.

Figure N°19 shows that the first step consists of stamping in a die a flat metal sheet -16- by means of a cut tool -17-, being obtained a flat disk plate -18- from which the ring -5- will be conformed.

This first constitution step is highly important as for the construction of these metal sheet rings, it starts as from a flat metal disk of easy manufacturing and low cost.

Indeed, in most cases, it starts from a cylindrical ring constituted by a folded metal sheet which ends are attached by welding. Instead, with this inventive method, it was found the way to avoid the ring being constituted by means of a welding union. A sole annular body is obtained, disappearing the welding thereof, which is highly important for the behavior required to these pieces.

Figure N°20 shows that the second constitution step is made by means of a first constitution stamping or a deep stamping. Disk -18- already constituted in the previous step is mounted and through dies -19/20- the first annular fold is produced, wherein die -19- presents a design that contemplates the creation of fins.
Figure N^{a}21 shows that a third constitution step consists of constituting a metal sheet ring by means of cutting and removing the circular bottom -21- presented in the piece treated in the previous step. Thus a cut-die -22- is used and the corresponding support -23-. At the same time, due to a cooperating action of these dies, the fin -11- of the ring being conformed is born.

Figure N°22 shows a further step wherein the ring being conformed in the previous step is reversed and placed in a base support -24- provided from a seat that responds to the final format and dimension of the annular fin -11-, while the fin -10- is conformed by stamping using the tool -25- that, as it is shown in this figure, includes an active path -26- especially designed to provide a desired constitution of this fin -10-.

At this point, it is possible to contemplate other advantages of the claimed method, such as the fact that by changing the design of the active surface of said cut-die -22- matching the path generating the fold that allows fin -11- to be born, another format, orientation or dimension for each fin may be designed.

The same occurs to the stamping die -25- that is shown in figure N°22, wherein the mentioned active surface -26- will have a design according to the dimension, orientation or transition curvature angle established by the manufacturer with respect to the design of the cooling channel that is going to be produced.

It should be understood, according to what stated in the previous two paragraphs, that it will be enough to have sets of dies according to the different annular cooling tubes being required by clients, to produce all the existing designs in the market; whenever all the steps established in this novel method are followed, starting from a metal sheet flat disk.

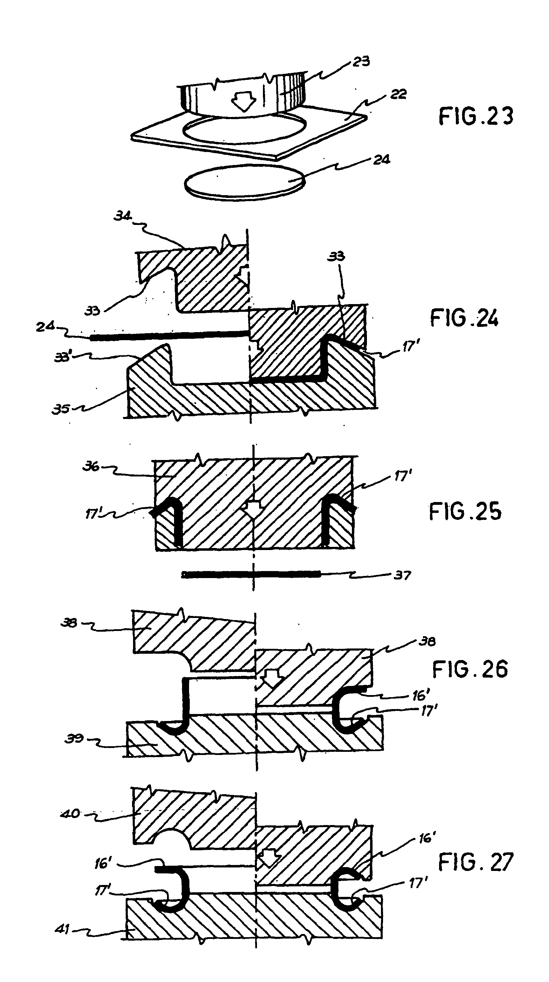

Just to illustrate which was said in the previous paragraph, figures Nos. 23/27 are included to show how the inventive method allows the conformation of a metal sheet ring which profile responds to a "C" of curved fins.

Figure N°23 shows that the first constitution step is the same in each case. (See Fig. N°19).

Once the metal disk -18- is obtained, the second conformation step starts, represented in figure N°24, wherein the stamping die -28-, presents an annular path -27- of its active surface that responds to a foreseen pattern to bring a pre-format different to what the fin -11'- will be -11-; while base -29- responds to a pattern cooperating with such design, that is appreciated in its annular path -27'-.

The step of removing the bottom -21-, is also similar to the one indicated in figure 21; while in the steps shown in figures 26 and 27, stamping dies -30-, -31-, -32-, and -33- appear, especially created to bring a final form to a cross sectional metal sheet ring according to a "C" of curved fins -10'- and -11'-.

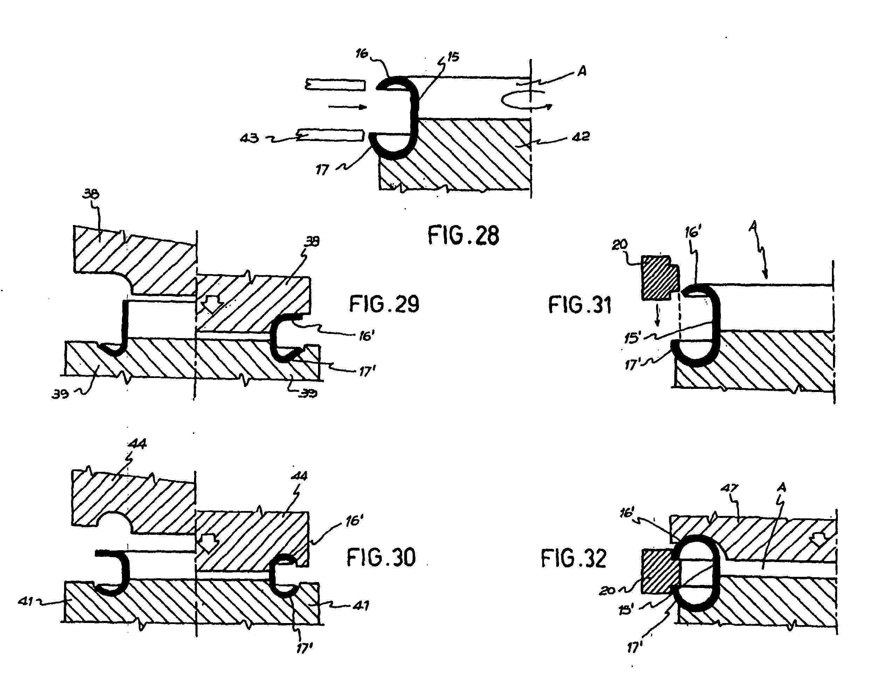

Now turning to figure N°28, it is appreciated, in detail, the subsequent calibration step, wherein the preformed metal sheet ring -5- is mounted on a rotating support -34- such that, by means of a cut tool -35- the diameter of the free end of fins -10- and -11- may be precisely determined, as well as eventual rough edges or surface irregularities are removed.

The method herein is especially advantageous to produce metal sheet rings capable to be coupled to an assembly as the one shown in figures Nos. 31 and 32.

It is an assembly wherein the annular support -6- includes a pair of annular coupling steps -8- and -9- created to house the free ends of the fins -10'- and -11-; said coupling zone is the place where the welding process to constitute the hermetic union seal is carried out.

In order to insert the ring -5- in the support -6-, it is required that said fin -10'- should have an end diameter less than the diameter of the inside face -7- of said support -6- (figure N° 31).

Once positioned, the final stamping is carried out by means of the external stamping dies -36/37, (Figure no. 32).

In this case, it is only required that the stamping die -32- (figure N°30) makes a preform of this fin -10'- limiting its end diameter to the measurement required for the further positioning.

## Claims

1. METHOD OF MOUNTING A METAL SHEET RING ASSEMBLIED AND WELDED IN A CARRIER HOOP TO CONFORM THE ANNULAR COOLING TUBE OF A PISTON OF AN INTERNAL COMBUSTION ENGINE, of the type that uses a metal sheet ring (5), whose cross section comprises a web (15) extending between two fins (10) and (11) projecting towards the carrier hoop (6), wherein the free ends of said fins rest on and couple to respective annular seats (8) and (9) being defined in the internal face of the carrier hoop, matching its curbs of internal edge; where said support and coupling are sealed by respective annular welding beads (14) extending along the mentioned annular seats and rest on the body of the carrier hoop, being conformed an internal annular cooling tube (3) which inside surface is constituted by a metal sheet ring and the internal diametrical surface (7) of the carrier hoop extending between both annular seats, **characterized in that** for said support and coupling it is presented a preform of the metal sheet ring (5) that has a fin (10') of the "U" cross section thereof open at an angle larger than the other one (11), such that the free end of said preform fin (10') is less than the diameter of the interior surface (7) of the carrier hoop (6); whereas the diameter of the free end of the other fin (11) of the same preform is greater than that of said interior surface (7) of the support hoop (6), being the mounting completed with a final stamping operation performed by means of a tool (H) that has external dies (36/37) which provide the ultimate support and format to said fin (10) of the metal sheet ring (5).

2. METHOD OF MOUNTING A METAL SHEET RING ASSEMBLIED AND WELDED IN A CARRIER HOOP, according to claim 1, , **characterized in that** the metal sheet ring has a greater height than the carrier hoop and the fins thereof (10) and (11) are oriented in convergent directions towards the respective annular seats (8) and (9) of the carrier hoop (6).

3. METHOD OF MOUNTING A METAL SHEET RING ASSEMBLIED AND WELDED IN A CARRIER HOOP, according to claim 1, **characterized in that** the body of the carrier hoop is of a truncated cone cross section and the fins of the metal sheet ring are oriented in convergent directions towards the respective annular seats of the carrier hoop.

4. METHOD OF MOUNTING A METAL SHEET RING ASSEMBLIED AND WELDED IN A CARRIER HOOP, according to claim 1, **characterized in that** one of the fins (11) of the metal sheet ring is oriented in perpendicular direction to the body of the carrier hoop and the other fin (10) follows a curved line and then finishes in a final straight path extending up to the seat, which is in cross direction to the carrier hoop.

5. METHOD OF MOUNTING A METAL SHEET RING ASSEMBLIED AND WELDED IN A CARRIER HOOP, according to claim 1, **characterized in that** the metal sheet ring has a greater height than the carrier hoop and both of its fins are curved having the ending paths thereof oriented in cross direction to the carrier hoop.

6. METHOD OF MANUFACTURE OF A FIN METAL SHEET RING ASSEMBLIED WITH A CARRIER HOOP, of the type that originates from taking a flat metal sheet of adequate thickness, cutting the same conforming a circular disk; producing, by stamping over such disk, a circumferential wall having a folded edge of diverging fin (11); cutting and removing its circular bottom, by stamping over the constituted piece in the previous step; taking the constituted ring in the previous step and conforming a second folded edge of diverging fin by stamping over the circular edge opposite to the one already existing in the first diverging fin **characterized in that** the second folded edge of the diverging fin (10') is formed with both a lowering angle and a greater angle than the first folded edge of the diverging fin (11); thereafter coming the calibrating step that consists of exactly defining said diameters of the edges of said diverging fins (10') and (11'); thereafter incorporating this metal sheet ring preform (5) into the carrier hoop (6), making sure that the first of said diverging fins (11) rests on the appropriate annular seat (9), whereas the second diverging fin (10') is disposed facing its appropriate annular seat (8); thereafter coming a final stamping process that gives the ultimate support and form to said second diverging fin (10).

7. METHOD OF MANUFACTURE OF A FIN METAL SHEET RING ASSEMBLIED WITH A CARRIER HOOP, according to claim 6, **characterized in that** said calibrating step comprises placing the fin ring preformed in the previous step is placed in a rotating support and submitted to a final calibration by means of cut tools acting on the circumferential edges of both fins.

8. METHOD OF MANUFACTURE OF A FIN METAL SHEET RING ASSEMBLIED WITH A CARRIER HOOP, according to claim 6, **characterized in that** final stamping dies comprise a support piece and a stamping tool whose active surfaces of cooperating action surround the preformed metal sheet ring (5) upon which they act, presenting active peripheral paths whose form responds to the ultimate design that is being constituted.

9. METHOD OF MANUFACTURE OF A FIN METAL SHEET RING ASSEMBLED WITH A CARRIER HOOP, according to claim 6, **characterized in that** the cutting being produced on the metal sheet in the first step, is carried out by means of a circular cut-die by stamping.

## Patentansprüche

1. VERFAHREN ZUR MONTAGE EINES METALLTAFELRINGS, DER ZUSAMMENGESETZT UND AN EINEN RINGTRÄGER GESCHWEISST WIRD, UM DIE RINGFÖRMIGE KÜHLRÖHRE DES KOLBENS EINES VERBRENNUNGSMOTORS ZU BILDEN, wobei der Aufbau aus einem Metalltafelring (5) besteht, dessen Querschnitt einen zwischen zwei zum Ringträger (6) hin ragenden Schenkeln (10) und (11) verlaufenden Steg (15) aufweist, so dass die freien Enden dieser Schenkel auf jeweiligen ringförmigen Vorsprüngen (8) und (9) ruhen und damit verbunden sind, welche in der Innenfläche des Ringträgers bestimmt sind und dieselbe Krümmung wie die Innenkante aufweisen; wobei die genannten Stützen und Verbindungen jeweils durch ringförmige Schweißraupen (14) versiegelt sind, die entlang der genannten ringförmigen Vorsprünge verlaufen und auf dem Körper des Ringträgers ruhen und eine innere ringförmige Kühlröhre (3) bilden, deren Innenfläche von einem Metalltafelring und der inneren diametrischen Fläche (7) des zwischen den beiden genannten ringförmigen Vorsprüngen verlaufenden Ringträgers gebildet wird, **dadurch gekennzeichnet, dass** für die Stütze und Verbindung eine Vorform des Metalltafelrings (5) vorgesehen ist, bei dem ein Schenkel (10') des U-Querschnitts in einem größeren Winkel geöffnet ist als der andere (11), so dass das freie Ende des Vorformschenkels (10') einen geringeren Durchmesser hat als die Innenfläche (7) des Ringträgers (6); wobei der Durchmesser des freien Endes des anderen Schenkels (11) derselben Vorform größer ist als derjenige der genannten Innenfläche (7) des Stützrings (6), wobei die Montage durch einen letzten Pressvorgang mit Hilfe eines Werkzeugs (H) beendet wird, das externe Druckplatten (36/37) hat, welche dem genannten Schenkel (10) des Metalltafelrings (5) die letzte Stütze und Form geben.

2. VERFAHREN ZUR MONTAGE EINES METALLTAFELRINGS, DER ZUSAMMENGESETZT UND AN EINEN RINGTRÄGER GESCHWEISST WIRD, nach Anspruch 1, **dadurch gekennzeichnet, dass** der Metalltafelring höher ist als der Ringträger und dass seine Schenkel (10) und (11) in konvergierender Richtung zu den jeweiligen ringförmigen Vorsprüngen (8) und (9) des Ringträgers (6) ausgerichtet sind.

3. VERFAHREN ZUR MONTAGE EINES METALLTAFELRINGS, DER ZUSAMMENGESETZT UND AN EINEN RINGTRÄGER GESCHWEISST WIRD, nach Anspruch 1, **dadurch gekennzeichnet, dass** der Körper des Ringträgers einen Stumpfkegelquerschnitt hat und dass die Schenkel des Metalltafelrings in konvergierender Richtung zu den jeweiligen ringförmigen Vorsprüngen des Ringträgers ausgerichtet sind.

4. VERFAHREN ZUR MONTAGE EINES METALLTAFELRINGS, DER ZUSAMMENGESETZT UND AN EINEN RINGTRÄGER GESCHWEISST WIRD, nach Anspruch 1, **dadurch gekennzeichnet, dass** einer der Schenkel (11) des Metalltafelrings senkrecht zum Körper des Ringträgers ausgerichtet ist und der andere Schenkel (10) einer gekrümmten Linie folgt und dann in einer Geraden endet, die sich bis zum Vorsprung erstreckt, der in Querrichtung zum Ringträger verläuft.

5. VERFAHREN ZUR MONTAGE EINES METALLTAFELRINGS, DER ZUSAMMENGESETZT UND AN EINEN RINGTRÄGER GESCHWEISST WIRD, nach Anspruch 1, **dadurch gekennzeichnet, dass** der Metalltafelring höher ist als der Ringträger und dass seine beiden Schenkel gekrümmt sind, so dass die Endpfade in Querrichtung zum Ringträger ausgerichtet sind.

6. VERFAHREN ZUR FERTIGUNG EINES MIT SCHENKELN VERSEHENEN METALLTAFELRINGS, DER MIT EINEM RINGTRÄGER VERBUNDEN WIRD, indem eine flache Metalltafel von angemessener Stärke zu einer runden Scheibe geschnitten wird, durch Pressen der Scheibe eine Umfangswand mit einem umgefalzten Rand mit divergierendem Schenkel (11) entsteht, der runde Boden des im vorigen Schritt gebildeten Stück ausgestanzt und entfernt wird, und an dem im vorigen Schritt gebildeten Ring eine zweite Falzkante mit divergierendem Schenkel geformt wird, indem der runde Rand gegenüber dem ersten bereits bestehenden divergierenden Schenkel gepresst wird, **dadurch gekennzeichnet, dass** der zweite gefalzte Rand des divergierenden Schenkels (10') sowohl mit einem geringeren als auch mit einem größeren Winkel als dem des ersten divergierenden Schenkels (11) geformt wird; hiernach erfolgt der Kalibrierschritt, der aus der exakten Bestimmung der genannten Durchmesser der Kanten der divergierenden Schenkel (10') und (11') besteht; danach wird diese Metalltafelring-Vorform (5) in den Ringträger (6) eingesetzt, wobei sichergestellt wird, dass der erste der divergierenden Schenkel (11) auf dem entsprechenden ringförmigen Vorsprung (9) ruht, während der zweite divergierende Schenkel (10') so angeordnet wird, dass er gegenüber seinem ringförmigen Vorsprung (8) liegt; danach erfolgt der letzte Pressvorgang, der dem zweiten divergierenden Schenkel (10) seine endgültige Stütze und Form gibt.

7. VERFAHREN ZUR FERTIGUNG EINES MIT SCHENKELN VERSEHENEN METALLTAFELRINGS, DER MIT EINEM RINGTRÄGER VERBUNDEN WIRD, nach Anspruch 6, **dadurch gekennzeichnet, dass** der genannte Kalibrierschritt daraus besteht, dass der im vorigen Schritt vorgeformte Schenkelring auf eine rotierende Unterlage gelegt und mit Hilfe von Fräswerkzeugen, die auf die Umfangskanten beider Schenkel einwirken, einer letzten Kalibrierung unterzogen wird.

8. VERFAHREN ZUR FERTIGUNG EINES MIT SCHENKELN VERSEHENEN METALLTAFELRINGS, DER MIT EINEM RINGTRÄGER VERBUNDEN WIRD, nach Anspruch 6, **dadurch gekennzeichnet, dass** die letzten Druckplatten ein Stützteil und ein Pressteil umfassen, deren aktive Flächen im Einklang miteinander den vorgeformten Metalltafelring (5) umgeben, auf den sie einwirken, und aktive, periphäre Pfade haben, deren Formen der endgültigen Gestaltungsform entsprechen.

9. VERFAHREN ZUR FERTIGUNG EINES MIT SCHENKELN VERSEHENEN METALLTAFELRINGS, DER MIT EINEM RINGTRÄGER VERBUNDEN WIRD, nach Anspruch 6, **dadurch gekennzeichnet, dass** der Schnitt, der im ersten Schritt an der Metalltafel ausgeführt wird, durch eine runde Stanzung erfolgt.

## Revendications

1. MÉTHODE DE MONTAGE D'UN ANNEAU EN FEUILLE DE MÉTAL ASSEMBLÉ ET SOUDÉ DANS UN COLLIER DE SUPPORT POUR FAÇONNER LE TUYAU DE REFROIDISSEMENT ANNULAIRE D'UN PISTON D'UN MOTEUR DE COMBUSTION INTERNE, du type utilisant un anneau en feuille de métal (5), dont la section transversale comprend une nervure (15) s'étendant entre deux ailettes (10) et (11) se projetant vers le collier de support (6), **caractérisée en ce que** les extrémités libres desdites ailettes reposent sur et sont couplées à leurs logements annulaires respectifs (8) et (9) étant définis dans la face intérieure du collier de support en faisant coïncider les courbes du bord intérieur ; sachant que ledit support et couplage sont rendus étanches par leurs perles de soudure annulaires respectives (14) s'étendant le long des logements annulaires mentionnés et reposant sur le corps du collier de support, façonnant un tuyau de refroidissement annulaire interne (3) dont la surface intérieure est constituée d'un anneau en feuille de métal et la surface diamétrale intérieure (7) du collier de support s'étendant entre les deux logements annulaires, **caractérisée en ce que** pour ledit support et couplage, un préformage de l'anneau en feuille de métal (5) est présenté, ayant une ailette (10') de section transversale en « U » s'ouvrant à un angle supérieur à l'autre (11), de manière à ce que l'extrémité libre de ladite ailette préformée (10') soit inférieure au diamètre de la surface intérieure (7) du collier de support (6) ; tandis que le diamètre de l'extrémité libre de l'autre ailette (11) de la même préformation est supérieur à celui de ladite surface intérieure (7) du collier de support (6), sachant que le montage se termine par une opération d'estampage final réalisée au moyen d'un outil (H) ayant des matrices externes (36/37) fournissant le support final et le format final de ladite ailette (10) de l'anneau en feuille de métal (5).

2. MÉTHODE DE MONTAGE D'UN ANNEAU EN FEUILLE DE MÉTAL ASSEMBLÉ ET SOUDÉ DANS UN COLLIER DE SUPPORT, conformément à la revendication 1, **caractérisée en ce que** l'anneau en feuille de métal a une hauteur supérieure au collier de support et les ailettes de celui-ci (10) et (11) sont orientées dans des directions convergentes vers les logements annulaires respectifs (8) et (9) du collier de support (6).

3. MÉTHODE DE MONTAGE D'UN ANNEAU EN FEUILLE DE MÉTAL ASSEMBLÉ ET SOUDÉ DANS UN COLLIER DE SUPPORT, conformément à la revendication 1, **caractérisée en ce que** le corps du collier de support a une section transversale en cône tronqué et les ailettes de l'anneau en feuille de métal sont orientées dans des directions convergentes vers les logements annulaires respectifs du collier de support.

4. MÉTHODE DE MONTAGE D'UN ANNEAU EN FEUILLE DE MÉTAL ASSEMBLÉ ET SOUDÉ DANS UN COLLIER DE SUPPORT, conformément à la revendication 1, **caractérisée en ce qu'**une des ailettes (11) de l'anneau en feuille de métal est orientée perpendiculairement par rapport au corps du collier de support et l'autre ailette (10) suit une ligne courbée et se termine ensuite dans une voie rectiligne finale s'étendant jusqu'au logement, en direction transversale par rapport au collier de support.

5. MÉTHODE DE MONTAGE D'UN ANNEAU EN FEUILLE DE MÉTAL ASSEMBLÉ ET SOUDÉ DANS UN COLLIER DE SUPPORT, conformément à la revendication 1, **caractérisée en ce que** l'anneau en feuille de métal a une hauteur supérieure à celle du collier de support et ses deux ailettes sont courbées avec les voies finales de celui-ci orientées dans une direction transversale par rapport au collier de support.

6. MÉTHODE DE FABRICATION D'UN ANNEAU EN FEUILLE DE MÉTAL À AILETTES ASSEMBLÉ AVEC UN COLLIER DE SUPPORT, du type découlant de la prise d'un anneau en feuille de métal d'une épaisseur appropriée, en découpant un même anneau pour façonner un disque circulaire ; en produisant par estampage sur ledit disque une paroi circonférentielle ayant un bord plié de la bride divergente (11) ; en coupant et retirant son fond circulaire par estampage sur la pièce constituée à l'étape précédente ; en prenant l'anneau constitué à l'étape précédente et en façonnant un deuxième bord plié de la bride divergente par estampage sur le bord circulaire à l'opposé de celui existant déjà dans la première bride divergente **caractérisée en ce que** le deuxième bord plié de la bride divergente (10') est formé avec à la fois un angle inférieur et un angle supérieur au premier bord plié de la bride divergente (11) ; vient ensuite l'étape du calibrage qui consiste à définir exactement lesdits diamètres des bords desdites brides divergentes (10') et (11') ; en incorporant ensuite cet anneau en feuille de métal préformé (5) dans le collier de support (6), en veillant à ce que la première desdites brides divergentes (11) repose sur le logement annulaire approprié (9) tandis que la deuxième bride divergente (10') est positionnée face à son logement annulaire approprié (8) ; vient ensuite le processus d'estampage final donnant le support final et le format final à ladite deuxième bride divergente (10).

7. MÉTHODE DE FABRICATION D'UN ANNEAU EN FEUILLE DE MÉTAL À AILETTES ASSEMBLÉ AVEC UN COLLIER DE SUPPORT, conformément à la revendication 6, **caractérisée en ce que** ladite étape de calibrage comprend le placement de l'anneau à ailettes préformé à l'étape précédente dans un support rotatif et son dernier calibrage au moyen d'outils de coupe travaillant sur les bords circonférentiels de chaque ailette.

8. MÉTHODE DE FABRICATION D'UN ANNEAU EN FEUILLE DE MÉTAL À AILETTES ASSEMBLÉ AVEC UN COLLIER DE SUPPORT, conformément à la revendication 6, **caractérisée en ce que** les matrices d'estampage final comprennent une pièce de support et un outil d'estampage dont les surfaces actives à action de coopération entourent l'anneau en feuille de métal préformé (5) sur quoi ils agissent, présentant des voies périphériques actives dont le format correspond à la conception finale étant constituée.

9. MÉTHODE DE FABRICATION D'UN ANNEAU EN FEUILLE DE MÉTAL À AILETTES ASSEMBLÉ AVEC UN COLLIER DE SUPPORT, conformément à la revendication 6, **caractérisée en ce que** le coupage réalisé sur la feuille de métal à la première étape est exécuté au moyen d'une matrice de coupe circulaire par estampage.
